Europäisches Patentamt

European Patent Office

Office européen des brevets

(19)

(11) Numéro de publication: **0 123 573**
**B1**

(12) **FASCICULE DE BREVET EUROPEEN**

(45) Date de publication du fascicule du brevet: **11.05.88**

(51) Int. Cl.⁴: **H 04 N 7/13**

(21) Numéro de dépôt: **84400500.9**

(22) Date de dépôt: **13.03.84**

(54) Procédé de codage adaptatif, et de décodage, d'une image de télévision, et dispositifs pour la mise en oeuvre de ce procédé.

(30) Priorité: **22.03.83 FR 8304671**

(43) Date de publication de la demande:
**31.10.84 Bulletin 84/44**

(45) Mention de la délivrance du brevet:
**11.05.88 Bulletin 88/19**

(84) Etats contractants désignés:
**GB**

(56) Documents cités:
**EP-A-0 022 713**
**EP-A-0 063 990**
**DE-A-2 559 263**
**DE-A-3 111 823**
**US-A-3 071 727**
**US-A-3 824 590**
**US-A-4 268 861**

**IEE PROCEEDINGS-F, vol. 127, no. 5, octobre 1980, pages 405-409, Stevenage, Herts., GB; H. GHARAVI: "Bandwidth compression of digital colour-television signals using block-adaptive d.p.c.m"**

**IEEE NATIONAL TELECOMMUNICATIONS CONFERENCE, 1-3 décembre 1975, New Orleans, vol. 1, pages 22-10 à 22-17, IEEE, New York, US; P.J. READY et al.: "Block adaptive DPCM transmission of images"**

(73) Titulaire: **THOMSON-CSF**
**173, Boulevard Haussmann**
**F-75379 Paris Cédex 08 (FR)**

(72) Inventeur: **Richard, Christian**
**THOMSON-CSF SCPI 173, bld Haussmann**
**F-75379 Paris Cedex 08 (FR)**

(74) Mandataire: **Turlèque, Clotilde et al**
**THOMSON-CSF SCPI 19, avenue de Messine**
**F-75008 Paris (FR)**

(56) Documents cités:
**FERNSEH- UND KINO-TECHNIK, vol. 37, no. 1, janvier 1983, pages 15-20, Berlin, DE; H. AMOR: "Quellencodierung der Feinstrukturkomponenten hochaufgelöster Bilder"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un procédé de codage et de décodage permettant de réduire la quantité d'information d'une image de télévision, pour faciliter sa transmission ou son stockage. Ce procédé permet notamment le codage et le décodage d'une image unique telle que celle analysée par certaines caméras embarquées dans des avions de reconnaissances aériennes, un balayage étant effectué d'une part par le déplacement de l'avion, et d'autre part par un capteur optique linéaire analysant une seule ligne, ce capteur pouvant être constitué de plusieurs barrettes à transfert de charges (CCD) mises bout à bout. Une telle caméra analyse donc une image unique ayant un nombre infini de lignes. Dans ce cas les techniques de codage inter-images ou inter-trames ne sont pas utilisable.

Il est connu divers procédés de codage adaptatif codant les valeurs de luminance d'une image point par point, ou par plages de luminance constante en utilisant la redondance des informations de luminance dans une même ligne ou dans une même trame.

IEE Proceedings-F, vo 127, n° 5, octobre 1980, pages 405—409, Stevenage, Herts., GB; H. Gharavi: "Bandwidth compression of digital colour-television signals using block-adaptative d.p.c.m" décrit un procédé de codage par blocs de points, ces blocs étant linéaires et de longueur fixe. Ce procédé de codage distingue plusieurs type de blocs car il met en oeuvre plusieurs échelles de quantification. Pour chaque bloc, une échelle est sélectionnée en calculant la variance des valeurs de luminance des points du bloc puis en comparant la variance à plusieurs valeurs de seuil. Ce procédé procure une image décodée comportant des défauts visibles par l'oeil, car ce dernier a une sensibilité aux erreurs de codage qui n'est pas fonction directement de la variance des valeurs de luminance dans chaque bloc. L'oeil est très sensible à des erreurs de codage portant sur des points isolés où il y a un fort gradient de luminance.

L'objet de l'invention est un procédé fournissant une image décodée ayant une meilleure qualité, pour l'oeil, car il consiste à sélectionner une échelle de quantification en prenant en compte tous les points à fort gradient, même ceux qui sont isolés. Un autre avantage de procédé selon l'invention est qu'il code par une plus faible quantité d'information les blocs où il n'y a que des points à faible gradient de luminance, car il consiste à ne pas coder certains de ces points, leur valeur étant restituée par une interpolation.

L'objet de l'invention est principalement un procédé de codage adaptatif, et de décodage, d'une image de télévision, pour réduire le débit d'informations, chaque point de cette image étant représenté par la valeur de sa luminance, le codage consistant:

à regrouper des points de l'image par blocs de $N_p$ points consécutifs sur une même ligne, $N_p$ étant un nombre entier fixé;

à discriminer un premier et un second type de blocs, selon les valeurs de luminance des points des blocs;

à coder le premier type de blocs en calculant une valeur codée égale à la différence entre la valeur de luminance de chaque point et une valeur obtenue en condant puis en décodant la valeur de luminance du point immédiatement précédent, et en quantifiant cette différence selon une échelle de quantification non linéaire;

à coder le second type de bloc en calculant pour au moins un point du bloc une valeur codée égale à la différence entre la valeur de luminance de ce point et une valeur obtenue en codant puis en décodant la valeur de luminance d'un point, dit de référence, choisi parmi les points ayant été codés précédemment, puis en quantifiant la valeur de cette différence selon une échelle de quantification non linéaire telle que l'erreur de quantification est plus faible pour les faibles valeurs que pour les fortes valeurs de la différence de luminance;

à distinguer par un indicateur logique les valeurs codées correspondant aux blocs à fort gradient d'une part et celles correspondant aux blocs à faible gradient d'autre part;

et le décodage, pour obtenir une valeur de luminance décodée pour chaque point de l'image, consistant:

à identifier les valeurs codées correspondant aux blocs du premier type, d'une part, et celle correspondant aux blocs du second type, d'autre part, d'après la valeur de l'indicateur logique;

à décoder chaque bloc du premier type en déterminent une valeur décodée de la luminance de chacun de ses points par une quantification de sa valeur codée selon une échelle inverse de l'échelle de quantification utilisée pour le codage et par une addition de la valeur ainsi obtenue et de la valeur décodée de la luminance du point immédiatement précédent;

à décoder chaque bloc du second type en déterminant une valeur décodée de la luminance de chaque point ayant été codé et appartenant à ce bloc par une quantification de sa valeur codée, selon une échelle inverse de l'échelle de quantification utilisée pour le codage, et par une addition de la valeur ainsi obtenue et de la valeur décodée de la luminance du point de référence correspondant;

caractérisé en ce que pour discriminer deux types de blocs, il consiste à détecter les points, dits points à fort gradient de luminance, dont la valeur de luminance diffère au moins d'une valeur λ par rapport à celle d'un des points voisins sur la même ligne ou sur la ligne précédente; le premier type de blocs étant constitués par des blocs dits blocs à fort gradient de luminance, contenant au moins un point à fort gradient, et le second type étant constitué par des blocs dits à faible gradient, ne contenant aucun point à fort gradient;

et en ce que le décodage consiste en outre, à déterminer une valeur décodée de la luminance de chaque point n'ayant pas été codé et appartenant à un bloc du second type, par une interpolation en fonction des valeurs décodées de la luminance des points voisins sur la même ligne et sur la ligne précédente.

Un autre objet de l'invention est un dispositif de codage et un dispositif de décodage pour la mise en oeuvre de ce procédé.

L'invention sera mieux comprise et d'autres détails apparaîtront à l'aide de la description ci-dessous et des figures l'accompagnant.

La figure 1 représente un exemple d'une portion d'image et illustre le procédé selon l'invention;

la figure 2 représente le schéma synoptique d'un exemple de réalisation d'un dispositif de codage pour la mise en oeuvre du procédé selon l'invention;

les figures 3 et 5 représentent des schémas synoptiques plus détaillés de parties de cet exemple de réalisation;

la figure 4 représente un diagramme temporel d'un exemple de signaux d'horloge;

la figure 6 représente le schéma synoptique d'un exemple de réalisation d'un dispositif de décodage pour la mise en oeuvre du procédé selon l'invention.

la figure 7 représente le schéma synoptique plus détaillé d'une partie de cet exemple de réalisation du dispositif de décodage.

La description suivante considère, à titre d'exemple, une image unique non tramée monochrome mais ceci ne limite en rien la portée de l'invention qui peut être appliquée à une suite d'images de télévision classique. Chaque point de l'image à coder est représenté par la valeur numérique de sa luminance. Le procédé selon l'invention est un procédé adaptatif car le codage de la valeur de luminance d'un point est réalisé différemment en fonction du gradient de la luminance de l'image en ce point. Si le point considéré est situé sur un contour d'un objet, la valeur de luminance de ce point est fortement différente de celle d'au moins un de ses voisins. Par contre, si le point considéré est situé dans une région de l'image approximativement uniforme, la valeur de luminance en ce point est peu différente des valeurs de luminance de tous les points immédiatement voisins. Les informations nécessaires pour représenter ces deux types de zones sont non seulement différentes par leur quantité mais aussi par leur nature. Une zone approximativement uniforme comporte une quantité d'information moindre qu'une zone où sont situés des contours, et d'autre part ces informations correspondent à des écarts de la valeur de luminance qui sont plus faibles. Le procédé de codage et de décodage selon l'invention est adaptatif pour traiter différemment ces deux cas. Refaire le choix d'un type de codage pour chaque point compliquerait le codage et le décodage et augmenterait très fortement la quantité des informations codées puisque celles-ci devraient contenir une information indiquant la nature du codage utilisé pour chaque point; c'est pourquoi le procédé de codage selon l'invention conserve un même type de codage pour tout un bloc de points. D'ature part, tous les blocs sont de même longueur. Un codage par blocs de longueur variable nécessiterait en effet une quantité d'informations non négligeable pour coder la longueur de chaque bloc. Le procédé selon l'invention consiste à regrouper les points de l'image par blocs de $N_p$ points consécutifs sur une même ligne, $N_p$ étant un nombre entier fixé, égal à 4 par exemple. Il consiste ensuite à distinguer deux types de blocs et à les coder respectivement selon deux types de codage différents. Le premier type de blocs est constitué des blocs, dits blocs à fort gradient de luminace, contenant au moins un point dit à fort gradient de luminance, c'est-à-dire dont la valeur de luminance diffère au moins d'une valeur absolue fixée λ par rapport à celle d'un point voisin sur la même ligne ou la ligne précédente. Par exemple λ=10 pour une luminance dont les valeurs vont de 0 à 255. Le deuxième type de blocs est constitué par les blocs, dits blocs à faible gradient de luminance, ne contenant aucun point à fort gradient de luminance. Les blocs à fort gradient correspondent aux contours des objets représentés par l'image, alors que les blocs à faible gradient correspondant à des zones où la luminance est constante ou varie faiblement.

Chaque point d'un bloc à fort gradient est codé par un codage différentiel consistant à calculer la différence entre la valeur de sa luminance et une valeur obtenue en codant puis décodant la valeur de la luminance du point immédiatement précédent, puis en quantifiant cette différence selon une première échelle de quantification non linéaire. Ce codage différentiel est effectué en utilisant pour valeur de référence, non pas la valeur exacte de la luminance du point immédiatement précédent, mais en utilisant sa valeur codée-décodée, car pour le décodage ultérieur la valeur de référence utilisée ne sera pas la valeur exacte de la luminance du point précédent, mais sa valeur décodée, donc légèrement erronée. L'utilisation d'une valeur de référence identique pour le codage puis pour le décodage évite d'introduire une erreur supplémentaire. La première échelle de quantification non linéaire est telle que les erreurs de quantification sont plus faibles pour les fortes valeurs que pour les faibles valeurs de la différence de luminance, car dans les blocs à fort gradient les différences de luminance d'un point à un autre sont importantes en général. Ainsi les erreurs de quantification sont minimisées statistiquement.

Les points des blocs à faible gradient de luminance ne sont pas tous codés car les variations de luminance sont faibles, voire nulles, à l'intérieur de chaque bloc. Au moins l'un des points de chaque bloc est codé par un codage différentiel, et les autres points ne sont pas codés du tout, mais leur valeur de luminance peut être reconstituée par une interpolation. Par exemple, le premier et le troisième point de chaque bloc sont codés par un codage différentiel consistant à calculer la différence entre la valeur de luminance du point considéré et une valeur obtenue et codant puis en décodant la valeur de luminance d'un point, dit de référence, choisi parmi les points ayant été codés précédemment, puis en quantifiant la valeur de cette différence selon une seconde échelle de quantification non linéaire. Par exemple, le premier point de chaque bloc à faible gradient est codé différentiellement avec pour point de référence le quatrième point du bloc immédiatement précédent, quel que soit le type de ce bloc, et le troisième point de chaque bloc à faible gradient est codé avec pour point de référence de deuxième point de ce même bloc. La seconde échelle de quantification non linéaire est telle que l'erreur de quantification est plus faible pour les faibles valeurs que pour les fortes valeurs de la différence de luminance. Dans un bloc à faible gradient les différences de luminance sont en général faibles, les erreurs dues à la quantification sont donc ainsi minimisées statistiquement. Dans cet exemple le deuxième et le quatrième point de chaque bloc à faible gradient ne sont pas codés, il en résulte donc une notable réduction de la quantité d'informations. En outre, dans cet exemple, les valeurs de luminance des points des blocs à fort gradient sont codées par des mots binaires de trois bits alors que les valeurs de luminance dans les blocs à faible gradient sont codées par des mots binaires de deux bits.

Statistiquement, dans des images de type courant, les blocs à fort gradient représentent environ 15% de l'ensemble des blocs de quatre points constituant une image. Ce pourcentage est lié directement au nombre de points $N_p$ contenus dans chaque bloc. Si $N_p$ est choisi plus grand que qutre le pourcentage de blocs à fort gradient est plus important et par conséquent la quantité d'informations à transmettre est plus importante. Le type de chaque bloc doit être distingué par un indicateur logique afin de pouvoir décoder différemment les deux types de blocs. Cet indicateur logique est constitué d'un bit par bloc, il augmente donc la quantité d'information, d'autant plus que le nombre de points par blocs est plus faible. Le choix du nombre $N_p$ de points par blocs est donc un compromis entre ces deux contraintes.

L'identification du début et de la fin des blocs ne nécessite pas de séparateur puisque chaque bloc contient un nombre constant de points et qu'il suffit d'effectuer un comptage pour déterminer, aussi bien pendant le codage que pendant la décodage, où commence et où finit chaque bloc.

Le décodage consiste d'abord à identifier le type de chaque bloc d'après la valeur de l'indicateur logique. Chaque point d'un bloc à fort gradient est décodé en quantifiant in valeur codée selon une échelle inverse de la première échelle de quantification utilisée pour le codage afin d'obtenir une valeur de différence de luminance pouvant alier de 0 à 255, puis en additionnant cette valeur de différence de luminance à la valeur de luminance décodée du point précédent.

Pour les blocs à faible gradient, chaque point qui a été codé est décodé en quantifiant la valeur codée selon une échelle de quantification inverse de la seconde échelle de quantification utilisée pour le codage puis en additionnant la valeur obtenue à la valeur de la luminance décodée du point de référence, qui est ici le point précédent. Dans cet exemple, les points qui sont décodés de cette façon sont le premier et le troisième point de chaque bloc à faible gradient. Le premier point a pout point de référence le dernier point du bloc précédent et le troisième point a pour point de référence le deuxième point du même bloc, comme pour le codage. Les valeurs de luminance du deuxième et du quatrième point de chaque bloc à faible gradient, qui n'ont pas été codés, sont reconstituées par une interpolation en fonction des valeurs de luminance décodées des points voisins sur la même ligne et sur la ligne précédente. Par exemple, la valeur de luminance décodée pour le deuxième point est égale à la demi-somme de la valeur de luminance décodée du premier point du même bloc et de la valeur de luminance décodée du point suivant le point homologue sur la ligne précédente. De même, la valeur de luminance décodée du quatrième point d'un bloc à faible gradient est égale à la demi-somme de la valeur décodée de la luminance du troisième point du même bloc et de la valeur de luminance décodée du point suivant le point homologue sur la ligne précédente. La méthode d'interpolation peut comporter de nombreuses variantes notamment en ce qui concerne les coefficients de pondération utilisés. Le choix des points à coder et des points à ne pas coder dans les blocs à faible gradient de luminance peut être différent de celui décrit ci-dessus, la portée de l'invention ne se limite pas à cet exemple. Dans un cas où une plus grande erreur de codage et de décodage des plages à faible gradient peut être tolérée sans inconvénient il est possible de ne coder différentiellement qu'un seul point dans chaque bloc à faible gradient et de reconstituer par interpolation les valeurs de luminance de tous les autres points du bloc. Il est à remarquer que, dans un bloc à faible gradient, les valeurs de luminance sont peu différentes par rapport à celles des points homologues sur la ligne précédente, car s'il en était autrement pour au moins l'un de ses points le bloc serait considéré comme bloc à fort gradient. Par conséquent les erreurs d'interpolation sont faibles.

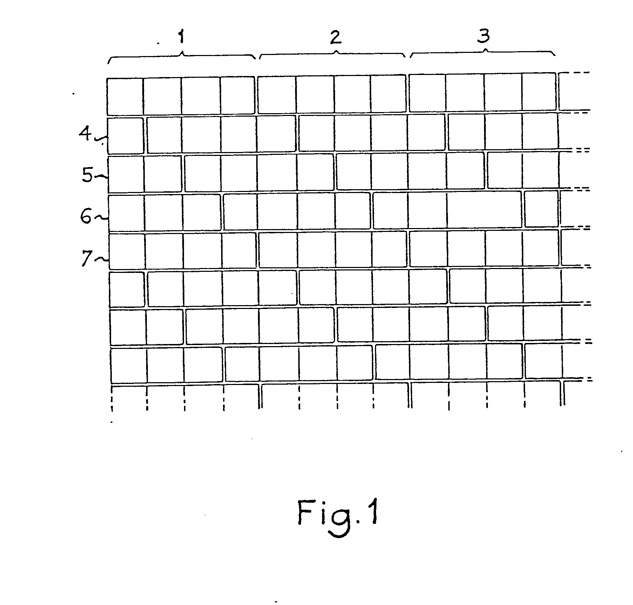

La reconstitution de valeurs de luminance par interpolation cause une erreur se traduisant, dans l'image reconstituée, par les défauts qui peuvent être visibles et gênants s'ils ont une structure périodique simple. C'est pourquoi un perfectionnement du procédé consiste à regrouper les points d'une image par blocs ayant un nombre $N_p$ de points fixé, mais en décalant d'au moins un point les blocs de deux lignes successives afin d'éviter que les défauts dûs aux erreurs d'interpolation sur une ligne soient situés exactement en coincidence avec des défauts apparaissant sur la ligne suivante et en coïncidence avec des défauts apparaissant sur la ligne précédente. La figure 1 représente un exemple d'une portion d'image où les points sont regroupés par blocs de quatre avec un décalage de un point entre les blocs de deux lignes consécutives. La première ligne comprend une suite de blocs de quatre points, 1, 2, 3, ..., la deuxième ligne comprend un premier bloc 4 qui ne contient qu'un seul point, puis une suite de blocs contenant quatre points. La troisième ligne comprend un premier bloc 5 contenant deux points, puis une suite de blocs contenant quatre points. La troisième ligne comprend un premier bloc 6 contenant trois points, puis une suite de blocs comprenant quatre points. La cinquieme ligne comprend un premier bloc 7 contenant quatre points puis une suite de blocs contenant quatre points, elle est donc identique à la première ligne. Les lignes suivantes sont constituées de la même façon que ces cinq premières lignes. Dans ce cas, les blocs particuliers 4, 5, et 6, qui ne contiennent pas quatre points sont codés par exemple par le même type de codage différentiel que les blocs à fort gradient. Cette répartition des points en blocs étant strictement périodique un comptage permet de repérer le premier point et le denier point des blocs pour le codage comme pour le décodage, sans avoir à rajouter d'informations pour constituer des séparateurs.

Le procédé selon l'invention permet d'obtenir un taux de compression de l'ordre de 4 pour un type d'images où les procédés classiques de codage différentiels adaptatifs procurent un taux de l'ordre de 3.

Une variante du procédé selon l'invention, pour obtenir une meileure restitution des zones à faible gradient dans une image, consiste à coder différemment les points à fort gradient et les points à faible gradient des blocs à fort gradient, en utilisant une échelle de quantification non linéaire différente pour ces deux types de points. Par exemple l'échelle de quantification utilisée pour les points à faible gradient des blocs à fort gradient peut être la même que celle utilisée pour coder les points des blocs à faible gradient. Cette variante permet de diminuer les erreurs dues à la quantification dans les zones à fort gradient, mais augmente la quantité d'informations puisqu'il est nécessaire de distinguer pour chaque point d'un bloc à fort gradient quelle échelle de quantification a été utilisée pour le codage. Naturellement de décodage consiste à identifier pour chaque point d'un bloc à fort gradient quelle échelle de quantification est à utiliser pour décoder sa valeur de luminance. Par exemple, la valeur de luminance des points à fort gradient peut être codée avec trois bits plus un bit indicateur du type de point, et les points à faible gradient peuvent être codés avec deux bits plus un bit indicateur du type de point. Dans ce cas la quantité d'informations est plus importante puisqu'il y a un bit de plus pour chaque point d'un bloc à fort gradient; mais, l'échelle de quantification utilisée pour coder les points à faible gradient étant une échelle minimisant les erreurs de quantification pour ce type de point, la qualité de l'image décodée est meilleure dans les blocs où il y a à la fois des points à fort gradient et des points à faible gradient.

Il est à la portée de l'homme de l'art d'adapter le procédé selon l'invention à la télévision en couleurs. Chaque point étant alors représenté par une valeur de luminance et deux valeurs de différence de couleur, il est codé en codant séparément ces trois informations selon le procédé décrit ci-dessus.

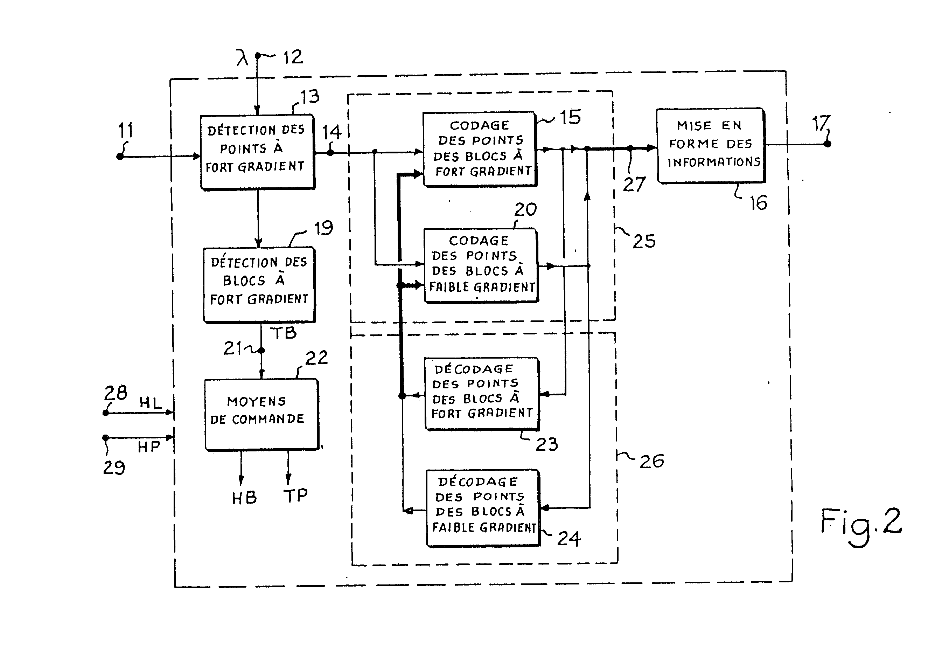

La figure 2 représente le schéma synoptique d'un exemple de réalisation d'un dispositif de codage selon l'invention, pour la mise en oeuvre du procédé décrit précédemment. Ce dispositif comporte un dispositif 13 de détection des points à fort gradient, un dispositif 19 de détection des blocs à fort gradient, des moyens de commande 22, des moyens de codage 25, des moyens de décodage 26, et un dispositif 16 de mise en forme des informations codées. Le dispositif de décodage selon l'invention reçoit sur une borne d'entrée 11 la suite des valeurs numériques de la luminance des points d'une image, et sur une borne d'entrée 12 une valeur numérique positive. λ. La suite des valeurs de luminance est appliquée à une entrée du dispositif 13, puis celui-ci la restitue avec un certain retard, à une borne d'entrée 14 des moyens de codage 25. Le dispositif 13 possède en outre une sortie reliée à une entrée du dispositif 19 de détection des blocs à fort gradient, pour lui fournir un signal logique lorsque la valeur de luminance d'un point diffère par rapport à celle d'un point voisin sur la même ligne, ou sur la ligne précédente, d'une valeur absolue supérieure à λ. Le dispositif 19 fournit sur une borne de sortie 21 un signal logique TB indiquant le type du bloc auquel appartient le point, dit point courant, qui est en cours de codage. Le signal TB est fourni à une entrée des moyens de commande 22. Des bornes d'entrée 28 et 29 du dispositif de décodage selon l'invention reçoivent respectivement des signaux logiques HL et HP qui sont un signal de synchronisation ligne et un signal d'horloge point, qui sont appliqués aux différents moyens constituant le dispositif de décodage pour synchroniser leur fonctionnement avec l'analyse de l'image. Ces signaux sont appliqués notamment aux moyens de commande 22 pour générer un signal d'horloge HB, dit signal d'horloge bloc, correspondant au traitement d'un bloc de quatre points consécutifs, et un signal logique TP correspondant au type du point courant, selon le type de codage à lui appliquer: un codage différentiel pour tous les points des blocs à fort gradient et pour le premier et le troisième point des blocs à faible gradient, et une absence de codage pour le deuxième et le quatrième point des blocs à faible gradient. Ces signaux sont élaborés par des compteurs incrémentés par le signal d'horloge point HP et initialisés par le signal de synchronisation ligne HL.

Les moyens de codage 25 sont constitués d'un dispositif 15 de codage des points des blocs à fort gradient et d'un dispositif 20 de codage des points des blocs à faible gradient, ayant une entré commune reliée à la borne d'entrée 14 des moyens 25, et ayant une sortie commune reliée à une borne de sortie 27. Les moyens de décodage 26 déterminent une valeur décodée de la luminance du point courant aussitôt que sa valeur codée a été determinée, ils sont constitués d'un dispositif 23 de décodage des points des blocs à fort gradient et d'un dispositif 24 de décodage des points des blocs à faible gradient, ayant des entrées respectivement reliées aux sorties du dispositif de codage 15 et du dispositif de codage 20, et ayant des sorties respectivement reliées à une entrée du dispositif de codage 15 et à une entrée du dispositif de codage 20, et fournissant la valeur décodée de la luminance du point précédant le point courant. La borne de sortie 27 est reliée à une entrée du dispositif 16 de mise en forme des informations, et une sortie de celui-ci constitue une borne de sortie 17 du dispositif de codage selon l'invention.

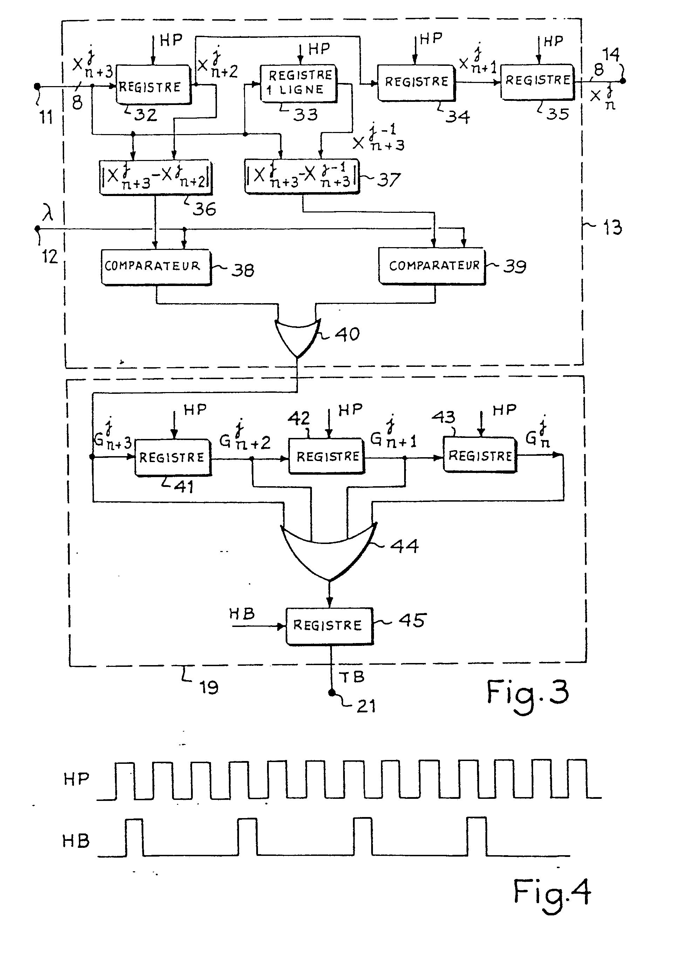

La figure 3 représente un schéma synoptique plus détaillé du dispositif 13 de détection des points à fort gradient et du dispositif 19 de détection des blocs à fort gradient. Le dispositif 13 comporte trois registres à un étage 32, 34 et 35, un registre 33 ayant un nombre d'étages correspondant au nombre de points d'une ligne d'image, deux dispositifs de calcul 36 et 37, deux comparateurs 38 et 39, et une porte logique OU 40. Les registres 32, 33, 34, et 35 sont des registres à décalage commandés par le signal d'horloge point HP. L'entrée du registre 32 et l'entrée du registre 33 sont reliées à la borne d'entrée 11 du dispositif de décodage selon l'invention et reçoivent à un instant considéré une valeur de luminance $X_{n+3}^j$ représentée par huit bits et correspondant à un point de rang n+3 sur une ligne de rang j. Au même instant la sortie du registre 32 fournit une valeur de luminance $X_{n+2}^j$ à l'entrée du registre 34. Au même instant la sortie du registre 33 fournit une valeur de luminance $X_{n+3}^{j-1}$, et la sortie du registre 34 fournit une valeur de luminance $X_{n+1}^j$ à l'entrée du registre 35. Au même instant la sortie du registre 35 fournit une valeur de luminance $X_n^j$ à la borne sortie 14 du dispositif 13. La valeur de luminance $X_n^j$ est celle qui est codée à l'instant considéré, elle correspond à un point courant de rang n sur la ligne de rang j. Au même instant c'est le gradient de luminance au point de rang n+3 sur la ligne de rang j qui est considéré par le dispositif 13. Le dispositif de calcul 36 possède deux entrées recevant respectivement les valeurs $X_{n+3}^j$ et $X_{n+2}^j$, et détermine $| X_{n+3}^j - X_{n+2}^j |$. Le dispositif de calcul 37 possède deux entrées recevant respectivement les valeurs $X_{n+3}^j$ et $X_{n+3}^{j-1}$, et détermine $| X_{n+3}^j - X_{n+3}^{j-1} |$. Les dispositifs de calcul 36 et 37 déterminent ainsi la valeur absolue de la différence de luminance du point de rang n+3 sur la ligne de rang j par rapport au point immédiatement précédent sur la même ligne et par rapport au point homologue sur la ligne précédente. Les deux valeurs qu'ils fournissent sont appliquées respectivement à une première entrée d'un comparateur 38 et à une première entrée d'un comparateur 39. Les comparateurs 38 et 39 reçoivent sur une seconde entrée commune la valeur λ appliquée à la borne d'entrée 12, et ils possèdent des sorties reliées respectivement à deux entrées de la porte logique OU 40. La sortie de la porte 40 constitue une sortie du dispositif 13 et est reliée à une entrée du dispositif 19 de détection des blocs à fort gradient.

Le dispositif 19 comporte quatre registres 41, 42, 43, et 45, et une porte logique OU 44 ayant quatre entrées. Les registres 41, 42, 43 sont des registres à un étage commandés par le signal d'horloge point HP. Le registre 45 est un registre à un étage commandé par le signal d'horloge bloc HB.

La figure 4 représente un diagramme des temps d'un exemple de signaux d'horloge HP et HB. Le signal d'horloge HB a une fréquence quatre fois plus faible que le signal d'horloge HP et ses impulsions sont retardées par rapport à celles du signal HP, d'un quart de la période de cette dernière.

Le dispositif 19 fournit sur sa borne de sortie 21 un signal logique TB indiquant le type de bloc auquel appartient le point, de tang n sur la ligne de rang j, qui est en cours de codage. A l'instant considéré la sortie de la porte OU 40 du dispositif 13 fournit un signal logique de valeur $G_{n+3}^j$ indiquant si le point de rang n+3 sur la ligne de rang j est un point à fort gradient ou à faible gradient, et cette valeur est fournie à une entrée du registre 41 et à une première entrée de la porte OU 44. Au même instant les sorties des registres 41, 42 et 43, fournissent respectivement des valeurs $G_{n+2}^j$, $G_{n+1}^j$, et $G_n^j$ indiquant si les points de rang n+2, n+1, et n, sur la même ligne sont à fort gradient. Ces valeurs sont appliquées respectivement à une deuxième, une troisième, et une quatrième entrée de la porte OU 44. La sortie de la porte OU 44 est reliée à l'entrée du registre 45, et la sortie de celui-ci est reliée à la borne de sortie 21 du dispositif 19. Lorsque le point de rang n+3, ou l'un des trois points le précédant sur la ligne de rang j, est un point à fort gradient un niveau logique j est appliqué à l'une des entrées de la porte OU 44 et la sortie de celle-ci fournit un niveau logique 1 à l'entrée du registre 45. Le niveau logique présent à la sortie de la porte 44 est mémorisé sous l'action du signal d'horloge HB. Le signal logique de valeur TB fourni par la sortie du registre 45 reste ensuite constant pendant le codage de quatre points, et il désigne le type du bloc constitué par ces quatre points.

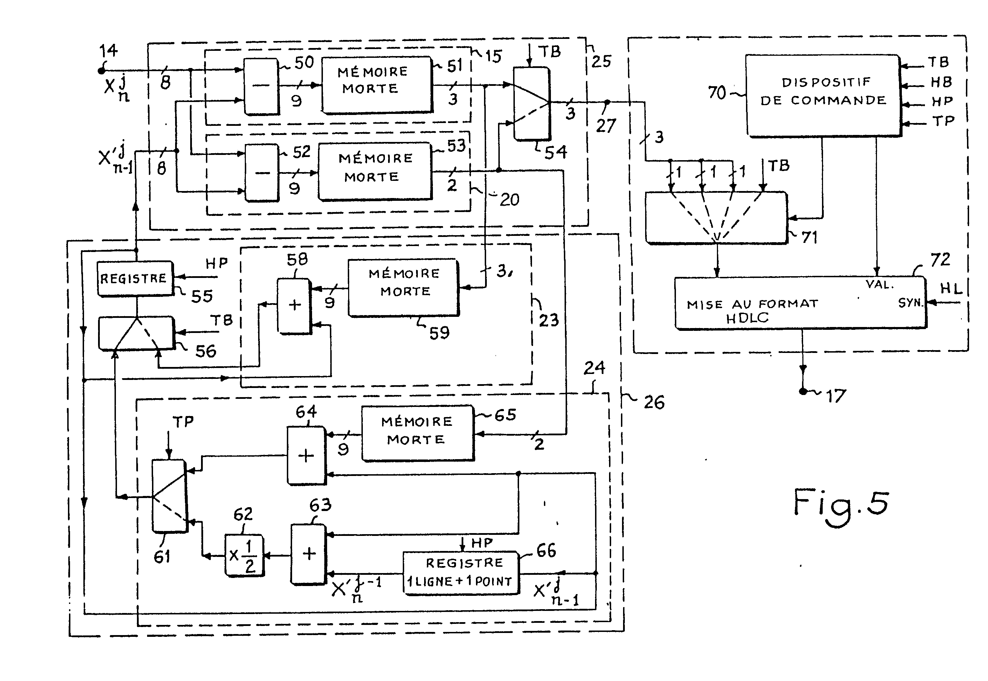

La figure 5 représente un schéma synoptique plus détaillé des moyens de codage 25, des moyens de décodage 26, et du dispositif 16 de mise en forme des informations codées. Les moyens 25 comportant principalement un dispositif 15 de codage des points des blocs à fort gradient et un dispositif 20 de codage des points des blocs à faible gradient. Le dispositif 15 est constitué d'un soustracteur 50 et d'une mémoire morte 51, le dispositif 20 est constitué d'un soustracteur 52 et d'une mémoire morte 53. Les moyens 25 comportent en outre un multiplexeur 54 à deux entrées et une sortie. Cette sortie est reliée à la borne de sortie 27 des moyens 25. La borne de sortie 14 du dispositif 13 de détection des points à fort gradient fournit, à un instant considéré, une valeur de luminance $X_n^j$ à une première entrée du soustracteur 50 et à une première entrée du soustracteur 52. Une sortie des moyens de décodage 26 fournit une valeur $X'_{n-1}^j$, valeur décodée de la luminance du point de rang n−1 sur la ligne de rang j, qui est le point précédant le point qui est en cours de codage à l'instant considéré. Cette valeur est appliquée à une seconde entrée du soustracteur 50 et à une seconde entrée du soustracteur 52. Les soustracteurs 50 et 52 ont deux sorties reliées respectivement à une entrée d'adresse de la mémoire morte 51 et à une entrée d'adresse de la mémoire morte 53. Les mémoires mortes 51 et 53 ont deux sorties de données reliées respectivement à une première et à une seconde entrée du multiplexeur 54. Les valeurs fournies par les sorties des soustracteurs 50 et 52 vont de −255 à +255 et sont codées sur neuf bits alors que les valeurs fournies par les sorties de données des mémoires 51 et 53 sont codées sur trois bits et deux bits respectivement. Les soustracteurs 50 et 52 réalisent un codage différentiel de la valeur $X_n^j$ du point de rang n sur la ligne de rang j par rapport à la valeur de luminance décodée $X'_{n-1}^j$ du piont immédiatement précédent sur la même ligne. Dans l'exemple considéré le point de référence utilisé pour le codage différentiel du premier et du troisième point des blocs à faible gradient est constitué par le point immédiatement précédant le point codé. Les soustracteurs 50 et 52 pourraient être confondus en un seul soustracteur. Les mémoires mortes 51 et 53 réalisent une quantification non linéaire qui est différente pour le codage des points des blocs à fort gradient et pour le codage des points des blocs à faible gradient. La mémoire morte 51 réalise une quantification sur une échelle non linéaire comportant huit niveaux tels que l'erreur de quantification sur les valeurs les plus élevées soit faible. La mémoire 53 réalise une quantification selon une échelle non linéaire comportant quatre niveaux tels que l'erreur de quantification sur les valeurs les plus faibles sont faible. Le multiplexeur 54 est commandé par le signal logique TB de façon à sélectionner la valeur fournie par la sortie de la mémoire 51 ou la valeur fournie par la sortie de la mémoire 53 en fonction du type de bloc, puis cette valeur est fournie à la borne de sortie 27.

Les moyens de décodage 26 comportent principalement un dispositif 23 de décodage des points des blocs à fort gradient et un dispositif 24 de décodage des points des blocs à faible gradient, ayant deux entrées reliées respectivement à la sortie du dispositif 15 et à la sortie du dispositif 20. Les moyens 26 comportent en outre un multiplexeur 56 à deux entrées et une sortie, et un registre 55 à un étage et dont la sortie constitue la sortie des moyens 26 et fournit à l'instant considéré la valeur de luminance décodée $X'_{n-1}^j$.

Le dispositif 23 de décodage des points des blocs à fort gradient comporte une mémoire morte 59, et un additionneur 58. L'entrée d'adresse de la mémoire morte 59 constitue l'entrée du dispositif 23, et reçoit une valeur codée sur trois bits fournie par la mémoire morte 51. La mémoire 59 réalise une quantification selon une échelle inverse de celle de la quantification réalisée par la mémoire 51 et fournit une valeur codée sur neuf bits qui est valeur de différence de luminance. Cette différence de luminance ne peut prendre que huit valeurs, qui sont réparties de −255 à +255, et qui sont égales aux valeurs des seuils de la quantification réalisée pour le codage. Cette valeur est appliquée à une première entrée de l'additionneur 58 qui reçoit sur une seconde entrée la valeur de luminance décodée $X'_{n-1}^j$ du point précédemment codé, fournie par la sortie du registre 55. La sortie de l'additionneur 58 constitue la sortie du dispositif 23 et est reliée à une première entrée du multiplexeur 56. Une seconde entrée du multiplexeur 56 est reliée à une sortie du dispositif 24, et la sortie du multiplexeur 56 est reliée à l'entrée du registre 55. Le multiplexeur 56 est commandé par le signal TB afin de sélectionner soit la valeur fournie par le dispositif 23 soit la valeur fournie par le dispositif 24 selon le type du bloc auquel appartient le point qui est en cours de codage dans les moyens 25, car son décodage a lieu simultanément dans les moyens 26. La valeur décodée transmise par le multiplexeur 56 est mémorisée par le registre 55 sous l'action du signal d'horloge HP afin d'être disponible pour le codage et le décodage de la valeur de luminance du prochain point qui va être traité.

Le dispositif 24 de décodage des points des blocs à faible gradient comporte une mémoire morte 65, deux additionneurs 63 et 64, un registre à décalage 66, un diviseur par deux 62, et un multiplexeur 61 à deux entrées et une sortie. Une première entrée du dispositif 24 est constituée par une entrée d'adresse de la mémoire morte 65 et est reliée à la sortie du dispositif 20 de codage des points des blocs à faible gradient, elle reçont donc des valeurs codées sur deux bits. Une sortie de données de la mémoire morte 65 fournit un mot binaire de huit bits à une première entrée de l'additionneur 64. Une seconde entrée de l'additionneur 64 reçoit la valeur décodée $X'_{n-1}^j$ fournie par la sortie du registre 55. La mémoire morte 65 réalise une quantification inverse de la quantification non linéaire réalisée par la mémoire 53 pour le codage, c'est-à-dire fournit une valeur comprise entre −255 et +255, et égale à l'une des valeurs des seuils de la quantification de codage. L'additionneur 64 additionne la valeur de différence de luminance fournie par la mémoire 65 à la valeur de luminance décodée du point traité précédemment. Le registre 66, l'additionneur 63, et le diviseur 62 permettent de reconstituer une valeur de luminance par interpolation. Le registre 66 possède une entrée série reliée à la sortie du registre 55, et une sortie série reliée à une première entrée de l'additionneur 63. Une seconde entrée de l'additionneur 63 est reliée à la sortie du registre 55, et une sortie est reliée à l'entrée du diviseur 62. Le registre 66 possède un nombre d'étages correspondant à une ligne plus un point et est commandé par le signal d'horloge point HP.

A l'instant considéré l'entrée série du registre 66 reçoit la valeur décodée $X'^{j}_{n-1}$ de la luminance du point précédent le point qui est en cours de codage par les moyens 25 et qui est en cours de décodage par les moyens 26, et la sortie série du registre 66 fournit une valeur décodée $X'^{j-1}_{n}$ du point de rang n sur la ligne de rang j−1. L'additionneur 63 et le diviseur 62 déterminent la demi-somme des valeurs $X'^{j-1}_{n}$ et $X'^{j}_{n-1}$.

La sortie de l'additionneur 64 fournit une valeur de luminance décodée correspondant au point de rang n sur la ligne de rang j à une première entrée du multiplexeur 61. Le multiplexeur 61 reçoit sur une seconde entrée la valeur reconstituée par l'interpolation, fournie par la sortie du diviseur 62. Le multiplexeur 61 est commandé par le signal logique TP de façon à sélectionner l'une de ces valeurs en fonction du type du point qui est en cours de codage et de décodage. Si ce point est effectivement codé le multiplexeur 61 transmet la valeur décodée fournie par l'additionneur 64, et si ce point n'a pas été codé le multiplexeur 61 transmet la valeur de luminance reconstituée fournie par la sortie du diviseur 62. La sortie du multiplexeur 61 constitue la sortie du dispositif 24 et est reliée à une seconde entrée du multiplexeur 56.

Dans une variante de réalisation, non représentée, les entrées d'adresse des mémoires mortes 59 et 65 peuvent être reliées respectivement à la sortie du soustracteur 50 et à la sortie du soustracteur 52, elles reçoivent alors des mots binaires de huit bits et fournissent des mots binaires de huit bits donnant directement les valeurs résultant de la succession de la quantification de codage et de la quantification de décodage.

Le dispositif 16 de mise en forme des information codées comporte un dispositif de commande 70, un multiplexeur 71 à quatre entrées et une sortie, et un dispositif 72 de mise au format HDLC. Le multiplexeur 71 possède quatre entrées recevant respectivement les trois bits fournis par la borne de sortie 27 des moyens de codage 25 et le bit du signal TB. Le multiplexeur 71 possède une sortie fournissant un bit à une entrée du dispositif 72, et une entrée de commande recevant un mot binaire fourni par le dispositif de commande 70 en fonction des signaux logiques TB et TP, et des signaux d'horloge HB et HP. Le dispositif 72 possède en outre une entrée de validation (val.) et une entrée de synchronisation (syn.) recevant respectivement un signal fourni par le dispositif de commande 70 et le signal de synchronisation ligne HL. La sortie du dispositif 72 est reliée à la borne de sortie 17 du dispositif de codage selon l'invention. Quand le dispositif de commande 70 reçoit le signal d'horloge bloc HB il commande le multiplexeur 71 pour transmettre la valeur du signal TB indiquant le type du bloc. Ensuite à chaque impulsion de l'horloge point HP le multiplexeur 71 transmet la valeur de l'un des bits fournis par la borne de sortie 27 du dispositif de codage 25. Pour chaque bit transmis par le multiplexeur 71 le dispositif de commande 70 fournit une impulsion de validation à l'entrée de validation du dispositif 72. Ces impulsions sont générées à une fréquence quatre fois supérieure à celle de l'horloge point HP, et leur nombre est fonction de la valeur des signaux TP et TB. Pour le premier point d'un bloc à fort gradient le dispositif de commande 70 commande la transmission du bit du signal TB puis successivement de chacun des trois bits de la valeur codée du premier point. Pour les trois autres points d'un bloc à fort gradient le dispositif de commande 70 commande seulement la transmission des trois bits de la valeur codée. Pour le premier point d'un bloc à faible gradient le dispositif de commande 70 commande la transmission du bit du signal TB puis successivement des deux bits de la valeur codée du premier point, qui sont les deux bits de poids le plus faible disponibles sur la borne 27. Pour le troisième point d'un bloc à faible gradient le dispositif de commande 70 commande seulement la transmission des deux bits de la valeur codée. Pour le deuxième et le quatrième point d'un bloc à faible gradient le dispositif de commande 70 ne fournit aucune impulsion de validation au dispositif 72 il n'y a donc transmission d'aucum bit. La transmission de deux, trois, ou quatre bits au dispositif 72 a une durée inférieure à la période de l'horloge point HP. Le dispositif 72 transmet les données codées sous forme série en intercalant un mot de synchronisation 01111110 à des instants qui correspondant au début d'une ligne, sous la commande du signal de synchronisation ligne HL. D'autre part, le dispositif 72 rejoute dans la suite des données codées, des zéros destinés à éviter l'apparition d'une suite 01111110 qui pourrait être prise pour un mot de synchronisation. La borne de sortie 17 peut être raccordée à une ligne de transmission, ou à des moyens de stockage, comportant un dispositif de régulation du débit des données connu de l'art antérieur.

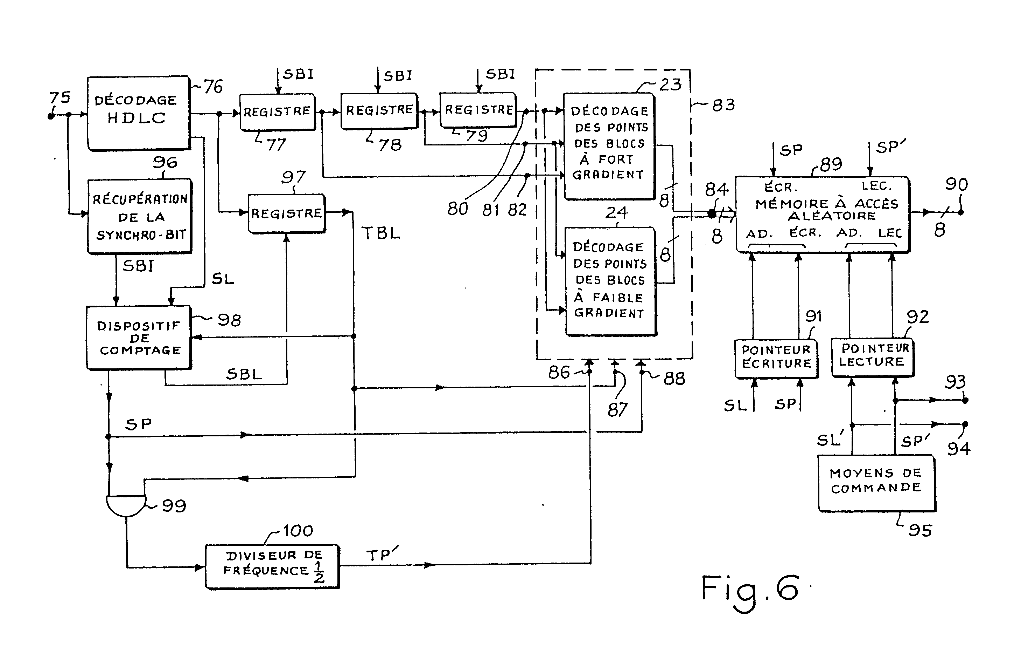

La figure 6 représente le schéma synoptique d'un exemple de réalisation d'un dispositif de décodage selon l'invention. Ce dispositif comporte un dispositif 76 de décodage HDLC, trois registres 77, 78, 79, des moyens 83 de décodage des points des blocs, une mémoire à accès aléatoire 89, un pointeur d'adresse d'écriture 91, un pointer d'adresse de lecture 92, des moyens de commande 95, un dispositif 96 de récupération de la synchronisation bit, un registre 97, un dispositif de comptage 98, une porte logique ET 99, et un diviseur de fréquence par deux 100. Le dispositif 76 de décodage HDLC possède une entrée reliée à une borne d'entrée 75 du dispositif de décodage selon l'invention, une première sortie reliée à une entrée du registre 97 et à une entrée du registre 77, et une seconde sortie reliée à une première entrée du dispositif de comptage 98. Le dispositif 96 de récupération de la synchronisation bit possède une entrée reliée à la borne d'entrée 75 et une sortie reliée à une seconde entrée du dispositif de comptage 98. Le dispositif de comptage 98 possède une troisième entrée reliée à une sortie du registre 97, une première sortie reliée à une entrée de commande du registre 97, et une

seconde sortie reliée à une première entrée de la porte ET 99 et à une borne d'entrée 88 des moyens 83. Une seconde entrée de la porte ET 99 est reliée à la sortie du registre 97, celle-ci étant reliée d'autre part à une borne d'entrée 87 des moyens 83. Le diviseur de fréquence par deux 100 possède une entrée reliée à la sortie de la porte ET 99 et une sortie reliée à une borne d'entrée 86 des moyens 83.

Le dispositif 76 de décodage HDLC reçoit par la borne d'entrée 75 une sortie de valeurs dans laquelle il élimine les zéros qui ont été rajoutés par le dispositif de codage HDLC du dispositif de codage selon l'invention et détecte les mots 01111110 qui délimitent les données codées correspondant à chaque ligne. Lors de la détection d'un tel motif le dispositif 76 fournit un signal logique de synchronisation de ligne. SL, à la première entrée du dispositif de comptage 98 afin d'initialiser le comptage des points d'une ligne. Le dispositif 96 de récupération de la synchronisation bit génère un signal d'horloge, dit de synchronisation bis SBI, synchronisé sur le rythme binaire des données codées reçues sur la borne d'entrée 75. Ce signal d'horloge est appliqué au dispositif de comptage 98 pour y déclencher un compteur afin de divser la fréquence du signal d'horloge SBI dans le rapport 13 ou dans le rapport 5 selon que les données codées en cours de réception correspondant aux points d'un bloc à fort gradient ou aux points d'un bloc à faible gradient respectivement. Le rapport de comptage est sélectionné en fonction de la valeur d'un signal logique TBL indiquant le type de bloc et qui est fourni par la sortie du registre 97. Le signal d'horloge obtenu ainsi est appelé signal de synchronisation point, SP, et est fourni sur la seconde sortie du dispositif de comptage 98. D'autre part le dispositif de comptage 98 comporte un autre compteur divisant dans le rapport deux ou quatre la fréquence du signal de synchronisation point SP en fonction du type de bloc indiqué par le signal logique TBL, pour fournir sur sa première sortie un signal logique, dit de synchronisation bloc SBL, indiquant le débit du décodage de chaque bloc. Le signal SBL est appliqué à l'entrée de commande du registre 97 afin de mémoriser dans celui-ci la valeur du premier bit des données codées de chaque bloc. Ce premier bit est la valeur de l'indicateur désignant le type du bloc. Le registre 97 fournit le même signal TBL pendant toute la durée du décodage d'un bloc. La porte 99 transmet le signal SP au diviseur de fréquence 100 pendant la durée du décodage d'un bloc de points à faible gradient. La sortie du diviseur de fréquence 100 fournit un signal logique TP' désignant le type de chaque point successivement, dans un bloc à faible gradient. Les registres 77, 78 et 79, sont des registres ayant chacun un étage de un bit et sont reliés en série. Le dispositif 76 de décodage HDLC fournit à l'entrée du registre 77 la suite des valeurs binaires reçues sur la borne d'entrée 75, après avoir éliminé les motifs 01111110 et les zéros supplémentaires qui ont été rajoutés pour éviter l'apparition de ce mot dans la suite des données codées. Les données codées circulent successivement dans les registres 77, 78 et 79, sous la commande du signal de synchronisation bit SBI. Les sorties des registres 77, 78 et 79, sont reliées en outre respectivement à des bornes d'entrée 82, 81, et 80, des moyens de décodage 83.

La mémoire à accès aléatoire 89 possède une entrée de données reliée à une borne de sortie 84 des moyens de décodage 83 pour recevoir un mot binaire de huit bits, une sortie reliée à une borne de sortie 90 du dispositif de décodage selon l'invention pour lui fournir un mot binaire de huit bits, une entrée de commande d'écriture recevant le signal SP, une entrée de commande de lecture recevant un signal logique SP', une première et une seconde entrée d'adresse d'écriture reliées respectivement à deux sorties du pointeur d'adresse d'écriture 91, et une première et une seconde entrée d'adresse de lecture reliées respectivement à deux sorties du pointeur d'adresse de lecture 92. Le pointeur d'adresse d'écriture 91 possède deux entrées recevant respectivement les signaux de synchronisation ligne et de synchronisation point SL et SP. Le pointeur d'adresse de lecture 92 possède deux entrées recevant respectivement des signaux de synchronisation SL' et SP' fournis par deux sorties des moyens de commandes 95. Les moyens de commande 95 génèrent les signaux SL' et SP' pour sychroniser respectivement la restitution des lignes et la restitution des points des images sur un dispositif de visualisation relié à la borne de sortie 90. Ils fournissent ces signaux à deux bornes de sortie 94 et 93 afin de transmettre ces signaux de synchronisation au dispositif de visualisation.

Les registres 77, 78, et 79, stockent les valeurs de trois bits consécutifs de la suite des données codées afin de permettre un décodage point par point, chaque point étant codé par trois bits, ou deux bits, ou zéro bit. Les moyens de décodage 83 fournissent pour chaque point, même pour les points qui n'ont pas été codés, une valeur de luminance décodée représentée par huit bits. Chaque valeur de luminance décodée est inscrite dans la mémoire à accès aléatoire 89 en attendant d'être restituée par les moyens de visualisation. Le rythme de la transmission des valeurs codées ne correspond pas au rythme d'analyse puisque la quantité d'informations à transmettre varie en fonction du type des blocs et que le débit de la transmission est régulée de façon à être constant. La mémoire 89 est utilisée comme tampon, sa capacité dépend donc du procédé de régulation de la transmission. Si la transmission a un débit constant en moyenne pour un nombre fivé p de lignes, la mémoire 89 est alors constituée avec une capacité correspondant à p lignes. Les adresses d'écriture et les adresses de lecture de la mémoire 89 sont constituées chacune de deux mots binaires, un mot binaire correspondant au rang d'une ligne et un mot binaire correspondant au rang d'un point sur une ligne. Les pointeurs d'adresse d'écriture et d'addresse de lecture, 91 et 92, sont constitués chacun de deux compteurs comptant respectivement les rangs des lignes et les rangs des points. Ils sont incrémentés respectivement par le signal de synchronisation de ligne et par un signal de synchronisation de point. Le pointeur d'adresse d'écriture 91 reçoit les signaux de synchronisation SL et SP qui sont déterminés à partir des informations codées reçues, alors que le pointeur d'adresse de lecture 92 est incrémenté par les signaux de synchronisation SL' et SP' générés par les moyens de commande 95 et qui synchronisent la lecture de la mémoire 89 avec la visualisation.

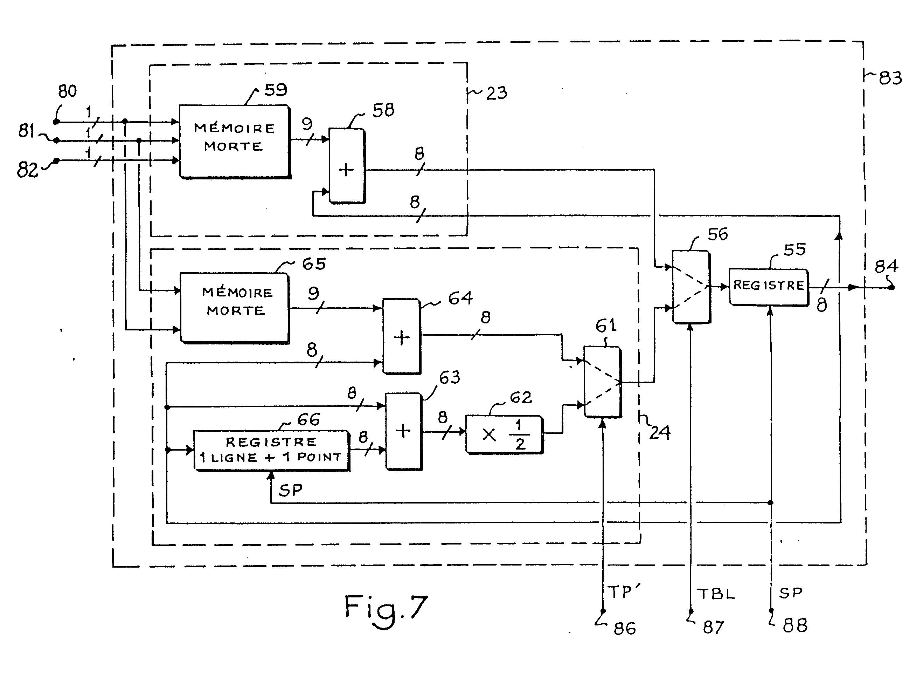

Les moyens 83 comportent principalement un dispositif 23 de décodage des points des blocs à fort gradient, et un dispositif 24 de décodage des points des blocs à faible gradient. Les moyens 83 sont semblables aux moyens de décodage 26 de l'exemple de réalisation du dispositif de codage selon l'invention décrit précédemment, à l'exception des signaux de commande. Les éléments semblables de ces moyens de décodage 26 et 83 portent les mêmes références numériques sur les figures 5 et 7.

La figure 7 représente le schéma synoptique d'un exemple de réalisation des moyens de décodage 83. Ils comportent un dispositif 23 de décodage des points des blocs à fort gradient, un dispositif 24 de décodage des points des blocs à faible gradient, un multiplexeur 56 à deux entrées et une sortie, et un registre 55. Le dispositif 23 comporte une mémoire morte 59 et un additionneur 58. La mémoire morte 59 possède une entré d'adresse recevant trois bits fournis par les trois bornes d'entrée 80, 81, et 82, et possède une sortie fournissant neuf bits à une première entrée de l'additionneur 58. L'additionneur 58 possède une seconde entrée recevant huit bits fournis par la sortie du registre 55, et une sortie fournissant huit bits à une première entrée du multiplexeur 56. Le dispositif de décodage 24 comporte une mémoire sorte 65, deux additionneurs 64 et 63, un registre 66 ayant une capacité correspondant à une ligne plus un point d'image, un diviseur par deux 62, et un multiplexeur 61 à deux entrées et une sortie. La mémoire morte 65 possède une entrée d'adresse recevant deux bits fournis par les bornes d'entrée 80 et 81, et possède une sortie fournissant neuf bits à une première entrée de l'additionneur 64. L'additionneur 64 possède une seconde entrée recevant huit bits fournis par la sortie du registre 55, et une sortie fournissant huit bits à une première entrée du multiplexeur 61. L'additionneur 63 possède une première entrée recevant huit bits fournis par la sortie du registre 55, une seconde entrée recevant huit bits fournis par la sortie du registre 66, et une sortie fournissant huit bits à une entrée du diviseur par deux 62. Une sortie du diviseur 62 est reliée à une seconde entrée du multiplexeur 61. La sortie du multiplexeur 61 est reliée à une seconde entrée du multiplexeur 56. La sortie du multiplexeur 56 est reliée à une entrée du registre 55. La sortie du registre 55 est reliée en outre à la borne de sortie 84 des moyens de décodage 83. Les bornes d'entrée 86, 87, et 88, des moyens 83, sont reliés respectivement à une entrée de commande du multiplexeur 61, une entrée de commande du multiplexeur 56, et une entrée de commande du registre 55, afin de leur fournir respectivement les signaux TP', TBL, et SP. Sous l'action du signal de synchronisation point SP le registre 55 mémorise la dernière valeur de luminance qui a été décodée afin de la fournir aux dispositifs de décodage 23 et 24. Le signal TBL, qui désigne le type du bloc en cours de décodage, commande le multiplexeur 56 pour sélectionner soit la valeur décodée par le dispositif 23 soit la valeur décodée par le dispositif 24. Le signal TP' qui désigne le type de chaque point d'un bloc à faible gradient, commande le multiplexeur 61 afin de sélectionner soit une valeur obtenue par un décodage inverse du codage réalisé avant la transmission, soit une valeur reconstituée par une interpolation. La borne d'entrée 88 fournit le signal SP en outre à une entrée de commande du registre 66, pour décaler les valeurs de luminance au rythme de décodage des points.

La mémoire morte 59 rélise une quantification selon une échelle non linéaire inverse de l'échelle de quantification de la mémoire 51 pour le codage, puis l'additionneur 58 additionne la valeur fournie par la mémoire 59 à la valeur de luminance décodée immédiatement précédemment afin d'obtenir une valeur de luminance décodée pour le point courant. La mémoire morte 65 réalise une quantification selon une échelle inverse de celle réalisée par la mémoire 53 pour coder le premier point et le troisième point des blocs à faible gradient, puis l'additionneur 64 additionne la valeur fournie par la mémoire morte 65 à la dernière valeur de luminance qui a été décodée. L'additionneur 63 et le diviseur par deux 62 reconstituent la valeur de luminance d'un deuxième ou troisième point d'un bloc à faible gradient en additionnant la valeur de luminance décodée du point précédant le point courant et la valeur de luminance décodée du point suivant le point homologue du point courant sur la ligne précédente, puis en divisant par deux la somme obtenue. Selon que le point courant est le premier, le deuxième, le troisième, ou le quatrième point d'un bloc à faible gradient, le multiplexeur 61 transmet soit la valeur de luminance décodée fournie par l'additionneur 64, soit la valeur de luminance reconstituée par interpolation, fournie par la sortie du diviseur 62.

L'invention ne se limite pas à l'exemple de réalisation décrit précédemment. Il est notamment à la portée de l'homme de l'art de choisir différemment: le nombre de points par bloc en fonction de la nature des images, le nombre et l'ordre des points qui sont codés dans les blocs à faible gradient, les coefficeints de pondération utilisés pour l'interpolation des valeurs de luminance reconstituées dans les blocs à faible gradient. Il est aussi à sa portée de réaliser un dispositif de codage et un dispositif de décodage des points des blocs à fort gradient réalisant un codage et un décodage avec des échelles de quantification différentes pour les points à faible gradient et pour les points à fort gradient, des blocs à fort gradient.

Le dispositif de codage et le dispositif de décodage selon l'invention peuvent être utilisés non seulement pour une transmission, mais aussi pour un stockage, par example sur bande magnétique. Dans ce dernier cas le rythme de sortie des données du dispositif de codage peut être complètement différent du rythme d'entrée de ces données dans le dispositif de décodage en utilisant une vitesse d'enregistrement et une vitesse de lecture différentes. Une adaptation des dispositifs de codage et de décodage à la télévision en couleurs peut être réalisée simplement en utilisant trois dispositifs semblables, un pour le signal de luminance, et un pour chacun des signaux de différence de couleurs.

**Revendications**

1. Procédé de codage adaptatif, et de décodage, d'une image de télévision, pour réduire le débit d'informations, chaque point de cette image étant représenté par la valeur de sa luminance, le codage consistant:

à regrouper des points de l'image par blocs de $N_p$ points consécutifs sur une même ligne, $N_p$ étant un nombre entier fixé;

à discriminer un premier et un second type de blocs, selon les valeurs de luminance des points des blocs;

à coder le premier type de blocs en calculant une valeur codée égale à la différence entre la valeur de luminance de chaque point et une valeur obtenue en codant puis en décodant la valeur de luminance du point immédiatement précédent, et un quantifiant cette différence selon une échelle de quantification non linéaire;

à coder le second type de bloc en calculant pour au moins un point du bloc une valeur codée égale à la différence entre la valeur de luminance de ce point et une valeur obtenue en codant puis en décodant la valeur de luminance d'un point, dit de référence, choisi parmi les points ayant été codés précédemment, puis en quantifiant la valeur de cette différence selon une échelle de quantification non linéaire telle que l'erreur de quantification est plus faible pour les faibles valeurs que pour les fortes valeurs de la différence de luminance;

à distinguer par un indicateur logique les valeurs codées correspondant aux blocs à fort gradient d'une part et celles correspondant aux blocs à faible gradient d'autre part;

et le décodage, pour obtenir une valeur de luminance décodée pour chaque point de l'image, consistant:

à identifier les valeurs codées correspondant aux blocs du premier type, d'une part, et celle correspondant aux blocs du second type, d'autre part, d'après la valeur de l'indicateur logique;

à décoder chaque bloc du premier type en déterminant une valeur décodée de la luminance de chacun de ses points par une quantification de sa valeur codée selon une échelle inverse de l'echelle de quantification utilisée pour le codage et par une addition de la valeur ainsi obtenue et de la valeur décodée de la luminance du point immédiatement précédent;

à décoder chaque bloc du second type en déterminant une valeur décodée de la luminance de chaque point ayant été codé et appartenant à ce bloc par une quantification de sa valeur codée, selon une échelle inverse de l'échelle de quantification utilisée pour le codage, et par une addition de la valeur ainsi obtenue et de la valeur décodée de la luminance du point de référence correspondant;

caractérisé en ce que pour discriminer deux types de blocs, il consiste à détecter les points, dits points à fort gradient de luminance, dont la valeur de luminance diffère au moins d'une valeur $\lambda$ par rapport à celle d'un des points voisins sur la même ligne ou sur la ligne précédente; le premier type de blocs étant constitués par des blocs dits blocs à fort gradient de luminance, contenant au moins un point à fort gradient, et le second type étant constitué par des blocs dits à faible gradient, ne contenant aucun point à fort gradient;

et en ce que le décodage consiste en outre, à déterminer une valeur décodée de la luminance de chaque point n'ayant pas été codé et appartenant à un bloc du second type, par une interpolation en fonction des valeurs décodées de la luminance des points voisins sur la même ligne et sur la ligne précédente.

2. Procédé selon la revendication 1, caractérisé en ce que l'échelle de quantification est la même pour tous les points des blocs à fort gradient de luminance et est telle que les erreurs de quantification sont plus faibles pour les fortes valeurs que pour les faibles valeurs de la différence.

3. Procédé selon la revendication 1, caractérisé en ce que l'échelle de quantification utilisée pour coder les points des blocs à fort gradient de luminance, est différente pour les points à fort gradient d'une part et pour les autres points d'autre part, l'échelle de quantification pour les points à fort gradient étant telle que les erreurs de quantification sont plus faibles pour les fortes valeurs que pour les faibles valeurs de la différence, et l'échelle de quantification pour les autres points étant telle que les erreurs de quantification sont plus faibles pour les faibles valeurs que pour les fortes valeurs de la différence; et en ce qu'il consiste en outre à adjoindre à la valeur codée de la luminance de chaque point d'un bloc à fort gradient, un indicateur logique indiquant si ce point est à fort gradient ou non.

4. Procédé selon la revendication 1, caractérisé en ce que les blocs de $N_p$ points de deux lignes successives sont décalés d'un nombre de points au moins égal à un et inférieur à $N_p$.

5. Dispositif de codage, pour la mise en oeuvre du procédé selon la revendication 1, caractérisé en ce qu'il comporte;

un dispositif (13) de détection des points à fort gradient de luminance, recevant la valeur numérique de la luminance de chaque point d'une image et une valeur numérique positive λ, et fournissant un signal logique lorsque la valeur de luminance d'un point diffère par rapport à celle d'un point voisin d'une valeur absolue supérieure à λ;

un dispositif (19) de détection des blocs à fort gradient de luminance, couplé au dispositif (13) de détection de points à fort gradient de luminance et fournissant pour chaque bloc de $N_p$ points consécutifs un signal logique TB indiquant si ce bloc contient au moins un point à fort gradient;

des moyens de commande (22) recevant le signal TB, un signal de synchronisation ligne BL, et un signal d'horloge HP pour chaque point, et générant pour chaque point des blocs à faible gradient un signal logique TP indiquant si ce point est à coder;

des moyens (25) de codage des points, commandés par le signal TB, comportant;

un dispositif (15) de codage des points des blocs à fort gradient recevant successivement la valeur de luminance de chaque point des blocs à fort gradient et une valeur décodée de la luminance du point précédent pour fournir une valeur codée par un codage différentiel et une quantification selon une échelle non linéaire;

un dispositif (20) de codage des points des blocs à faible gradient, commandé par le signal TP, et recevant successivement la valeur de luminance de chaque point des blocs à faible gradient et une valeur décodée de la luminance du point de référence correspondant, pour fournir une valeur codée par un codage différentiel et une quantification selon une autre échelle non linéaire dans le cas où un point est codé;

des moyens (26) de décodage des points, commandés par le signal TB, pour fournir aux moyens (25) de codage des points une valeur décodée de la luminance du point précédent le point en cours de codage, et comportant:

un dispositif (23) de décodage des points des blocs à fort gradient, pour quantifier la valeur codée de la luminance de chaque point des blocs à fort gradient selon une échelle non linéaire inverse de l'échelle de quantification utilisée pour le codage et additionner à la valeur ainsi obtenue la valeur décodée de la luminance du point précédemment décodé;

un dispositif (24) de décodage des points des blocs à faible gradient, commandé par les signaux TB et TP, pour quantifier la valeur codée de la luminance de chaque point qui est codé et qui appartient à un bloc à faible gradient, selon une échelle non linéaire inverse de l'échelle de quantification utilisée pour le codage, et pour additionner à la valeur ainsi obtenue la valeur décodée de la luminance du point précédemment décodé; et pour calculer, pour chaque point non codé des blocs à faible gradient, une valeur de luminance décodée égale à une valeur interpolée à partir des valeurs de luminance des points voisins sur la même ligne et sur la ligne précédente, et décodés précédemment;

un dispositif (16) de mise en forme des informations codées fournies par les moyens de codage (25) pour adjoindre aux valeurs de luminance codées des points de chaque bloc la valeur du signal logique TB pour indiquer si ce bloc est à fort gradient.

6. Dispositif de décodage, pour la mise en oeuvre du procédé selon la revendication 1, caractérisé en ce qu'il comporte:

des moyens (76, 96, 97, 98, 99, 100) pour recevoir des données codées, extraire un signal logique TBL distinguant celles correspondant à des blocs à fort gradient et celles correspondant à des blocs à faible gradient et en déduire un signal logique TP désignant les points qui appartiennent à des blocs à faible gradient et n'ont pas été codés;

des moyens (77, 78, 79) pour stocker la valeur codée de la luminance d'un point pendant son décodage;

des moyens (23) de décodage des points des blocs à fort gradient, commandés par le signal TBL, pour quantifier la valeur codée de la luminance de chaque point des blocs à fort gradient selon une échelle non linéaire inverse de l'échelle de quantification utilisée pour le codage et additionner à la valeur ainsi obtenue la valeur décodée de la luminance du point précédemment décodé;

un dispositif (24) de décodage des points d'un bloc à faible gradient, commandés par les signaux TBL et TP, pour quantifier la valeur codée de la luminance de chaque point qui a été codé et qui appartient à un bloc à faible gradient, selon une échelle non linéaire inverse de l'échelle de quantification utilisée pour le codage, et pour additionner à la valeur ainsi obtenue la valeur décodée de la luminance du point précédemment décodé; et pour calculer, pour chaque point non codé des blocs à faible gradient, une valeur de luminance décodée égale à une valeur interpolée à partir des valeurs de luminance des points voisins sur la même ligne et sur la ligne précédente, et décodées précédemment;

une mémoire (89) pour stocker les valeurs de luminance décodées fournies par les moyens de décodage (83) au rythme où les valeurs codées sont reçues, et les restituer avec un rythme constant sur une sortie du dispositif de décodage.

**Patentansprüche**

1. Verfahren zum adaptiven Kodieren und Dekodieren eines Fernsehbilds zur Verringerung des Informationsflusses, wobei jeder Punkt des Bildes durch den Wert seiner Helligkeit definiert ist,
wobei die Kodierung darin besteht:
Bildpunkte in Blöcken von $N_p$ auf einer Zeile aufeinanderfolgenden Punkten zusammenzufassen, wobei $N_p$ eine feste ganze Zahl ist,
zwischen einem ersten und einem zweiten Blocktyp zu unterscheiden, je nach dem Helligkeitswerten der Punkte der Blöcke,
den ersten Blocktyp zu kodieren, indem ein kodierter Wert gleich der Differenz zwischen dem Helligkeitswert jedes Punkts und einem Wert berechnet wird, der durch Kodierung und anschließende Dekodierung des Helligkeitswerts des unmittelbar vorhergehenden Punkts gewonnen wird, und indem die Differenz gemäß einem nichtlinearen Maßstab quantifiziert wird,

den zweiten Blocktyp au kodieren, indem für mindestens einen Punkt des Blocks ein kodierter Wert gleich der Differenz zwischen dem Helligkeitswert dieses Punkts und einem Wert berechnet wird, der durch Kodierung und anschließende Dekodierung des Helligkeitswerts eines Bezugspunkts ermittelt wird, der aus den vorher kodierten Punkten ausgewählt wird, und indem dann der Wert dieser Differenz gemäß einem nichtlinearen Maßstab quantifiziert wird, derart, daß der Quantifikationsfehler geringer für geringe Werte ist als für hohe Werte der Helligkeitsdifferenz,

durch einen logischen Indikator die kodierten Worte entsprechend den Blöcken mit großem Gradienten auf der einen Seite und die entsprechend den Blöcken mit niedrigen Gradienten auf der anderen Seite zu unterscheiden,

und wobei die Dekodierung zur Ermittlung eines dekodierten Helligkeitswerts für jeden Bildpunkt darin besteht;

die kodierten Werte entsprechend den Blöcken des ersten Typs einerseits und entsprechend den Blöcken des zweiten Typs andererseits je nach dem Wert des logischen Indikators zu identifizieren,

jeden Block des ersten Typs zu dekodieren, indem ein dekodierter Wert der Helligkeit jedes seiner Punkte durch eine Quantifizierung seines kodierten Werts gemäß einem zum Quantifiziermaßstab, der für die Kodierung verwendet wurde inversem Quantifiziermaßstab, und durch die Addition des so erhaltenen Werts und des dekodierten Helligkeitswerts des unmittelbar vorhergehenden Punkts bestimmt wird,

jeden Block des zweiten Typs durch Bestimmung eines dekodierten Helligkeitswerts jedes kodierten und diesem Block angehörenden Punkts dekodieren, indem sein kodierter Wert gemäß einem zum Quantifiziermaßstab, der zur Kodierung verwendet wurde, inversen Maßstab quantifiziert wird und indem der so erhaltene Wert und der dekodierte Helligkeitswert des entsprechenden Bezugspunkts addiert werden,

dadurch gekennzeichnet, daß zur Unterscheidung zweier Blocktypen die Punkte mit großem Helligkeitsgradienten ermittelt werden, deren Helligkeitswert mindestens um einen Wert $\lambda$ bezüglich des Werts der auf derselben Zeile oder auf der vorhergehenden Zeile benachbarten Punkte abweicht, wobei der erste Blocktyp von Blöcken mit großem Helligkeitsgradienten gebildet wird, die mindestens einen Punkt mit großem Gradienten enthalten, während der zweite Typ von Niedriggradientenblöcken gebildet wird, die keinen Punkt mit großem Gradienten enthalten,

und daß zur Dekodierung außerdem ein dekodierter Helligkeitswert jedes Punkts bestimmt wird, der nicht kodiert worden ist und einem Block des zweiten Typs angehört, indem abhängig von den dekodierten Helligkeitswerten der benachbarten Punkte auf derselben Zeile und auf der vorhergehenden Zeile eine Interpolation durchgeführt wird.

2. Verfahren nach Anspruch 1, dadurch gekennzeichnet, daß der Quantifiziermaßstab derselbe für alle Punkte der Blöcke mit großem Helligkeitsgradienten ist und so gewählt ist, daß die Quantifizierfehler für große Werte kleiner als für kleine Werte der Differenz sind.

3. Verfahren nach Anspruch 1, dadurch gekennzeichnet, daß der zur Kodierung der Punkte der Blöcke mit hohem Helligkeitsgradienten verwendete Quantifiziermaßstab für Punkte mit großem Gradienten ein anderer als der für die anderen Punkte ist, wobei der Quantifiziermaßstab für die Punkte mit hohem Gradienten so gewählt ist, daß die Quantifizierfehler geringer für hohe Werte als für niedrige Werte der Differenz sind, während der Quantifiziermaßstab für die anderen Punkte so gewählt ist, daß die Quantifizierfehler geringer für niedrige als für hohe Werte dieser Differenz sind, und daß außerdem dem kodierten Helligkeitswert jedes Punkts eines Blocks mit hohem Gradienten ein logischer Indikator zugefügt wird, der angibt, ob dieser Punkt einen großen Gradienten aufweist oder nicht.

4. Verfahren nach Anspruch 1, dadurch gekennzeichnet, daß die Blöcke von $N_p$ Punkten von zwei aufeinanderfolgenden Zeilen um eine Anzahl von Punkten mindestens gleich 1 und kleiner als $N_p$ verschoben sind.

5. Kodiervorrichtung zur Durchführung des Verfahrens nach Anspruch 1, dadurch gekennzeichnet, daß sie aufweist:

eine Vorrichtung (13) zur Ermittlung der Punkte mit hohem Helligkeitsgradienten, wobei diese Vorrichtung den digitalen Wert der Helligkeit jedes Punkts eines Bilds und einen positiven digital Wert $\lambda$ zugeführt erhält und ein logisches Signal liefert, wenn der Helligkeitswert eines Punkts gegenüber dem eines Nachbarpunktes um einen Wert größer als $\lambda$ differiert,

eine Vorrichtung (19) zur Ermittlung der Blöcke mit hohem Helligkeitsgradienten, wobei diese Vorrichtung an die Vorrichtung (13) zur Ermittlung von Punkten eines großen Helligkeitsgradienten gekoppelt ist und für jeden Block von $N_p$ aufeinanderfolgenden Punkten ein logisches Signal TB liefert, das angibt, ob der Block mindestens einen Punkt mit hohem Gradienten enthält,

Steuermittel (22), die das Signal TB, ein Zeilensynchronisationssignal HL und ein Taktsignal HP für jeden Punkt zugeführt erhalten und für jeden Punkt der Blöcke mit niedrigem Gradienten ein logisches Signal TP erzeugen, das angibt, ob dieser Punkt zu kodieren ist,

Mittel (25) zur Kodierung der Punkte, die von dem Signal TB gesteuert werden und enthalten;

eine Vorrichtung (15) zur Kodierung der Punkte der Blöcke mit hohem Gradienten, die nacheinander den Helligkeitswert jedes Punkts der Blöcke mit hohem Gradienten und einen dekodierten Wert der Helligkeit des vorhergehenden Punkts zugeführt erhält, um einen mittels Differentialkodierung und Quantifizierung gemäß einem nichtlinearen Maßstab kodierten Wert zu liefern,

eine Kodiervorrichtung (20) zur Kodierung der Punkte der Blöcke mit niedrigem Gradienten, wobei diese Vorrichtung vom Signal TP gesteuert wird und nacheinander den Helligkeitswert jedes Punkts der Blöcke mit niedrigem Gradienten und einen dekodierten Wert der Hellgikeit des entsprechenden Bezugspunkts zugeführt erhält, um einen durch eine Differentialkodierung und eine Quantifizierung gemäß einem anderen nichtlinearen Maßstab kodierten Wert für den Fall zu liefern, daß ein Punkt kodiert wird.

Mittel (26) zur Dekodierung der Punkte, die von dem Signal TB gesteuert werden, um den Mitteln (25) zur Kodierung der Punkte einen dekodierten Helligkeitswert des dem augenblicklich kodierten Punkt vorhergehenden Punkts zu liefern, wobei diese Mittel aufweisen:

eine Vorrichtung (23) zur Dekodierung der Punkte der Blöcke mit hohem Gradienten, um den kodierten Helligkeitswert jedes Punkts der Blöcke mit hohem Gradienten gemäß einem nichtlinearen Maßstab zu quantifizieren, der dem für die Kodierung verwendeten Quantifikationsmaßstab invers ist, und um dem so erhaltenen Wert den dekodierten Helligkeitswert des vorhergehenden dekodierten Punkts hinzuzufügen,

eine Vorrichtung (24) zum Dekodieren der Punkte der Blöcke mit niedrigem Gradienten, die von den Signalen TB und TP gesteuert wird, un den kodierten Helligkeitswert jedes Punkts, der kodiert ist und der einem Block mit niedrigem Gradienten angehört, gemäß einem zum für die Kodierung verwendeten Quantifiziermaßstab inversen nichtlinearen Maßstab zu quantifizieren und um dem so erhaltenen Wert den dekodierten Helligkeitswert des vorhergehenden dekodierten Punktes hinzuzufügen, und um für jeden nicht kodierten Punkt der Blöcke mit niedrigem Gradienten einen dekodierten Helligkeitswert gleich einem interpolierten Wert zu berechnen ausgehend von den Helligkeitswerten der benachbarten Punkte auf derselben Zeile und auf der vorhergehenden Zeile, die vorher dekodiert worden waren,

eine Vorrichtung (16) zur Formung der von den Kodiermitteln (25) gelieferten kodierten Informationen, um den kodierten Helligkeitswerten der Punkte jedes Blocks den Wert des logischen Siganls TB hinzuzufügen, um anzugeben, ob der Block einen hohen Gradienten besitzt.

6. Dekodiervorrichtung zur Durchführung des Verfahrens nach Anspruch 1, dadurch gekennzeichnet, daß sie aufweist:

Mittel (76, 96, 97, 98, 99, 100), um kodierte Daten zu empfangen, daraus ein logisches Signal TBL zu entnehmen, durch das zwischen Daten entsprechend Blöcken mit hohem Gradienten und Daten entsprechend Blöcken mit niedrigem Gradienten unterschieden wird, und um davon ein logisches Signal TP abzuleiten, das die Punkte bezeichnet, die Blöcken mit niedrigem Gradienten angebören und nicht kodiert worden waren,

Mittel (77, 78, 79) zur Speicherung des kodierten Helligkeitswerts eines Punkts während seiner Dekodierung,

Mittel (23) zur Dekodierung der Punkte der Blöcke mit hohem Gradienten, wobei diese Mittel vom Signal TBL gesteuert werden, um den kodierten Helligkeitswert jedes Punkts der Blöcke mit hohem Gradienten gemäß einem zum für die Kodierung verwendeten Quantifiziermaßstab inversen nichtlinearen Maßstab zu quantifizieren, und um den so erhaltenen Wert dem dekodierten Helligkeitswert des vorhergehend dekodierten Punkts hinzuzufügen,

eien Vorrichtung (24) zur Dekodierung der Punkte eines Blocks mit niedrigem Gradienten, wobei diese Vorrichtung von den Signalen TBL und TP gesteuert wird, um den kodierten Helligkeitswert jedes Punkts, der kodiert worden war und der einem Block mit niedrigem Gradienten angehört, gemäß einem zum für die Kodierung verwendeten Quantifizierungsmaßstab inversen nichtlinearen Maßstab zu quantifizieren und um dem so erhaltenen Wert den dekodierten Helligkeitswert des vorhergehend dekodierten Werts hinzuzufügen und um für jeden nicht kodierten Punkt der Blöcke mit niedrigen Gradienten einen dekodierten Helligkeitswert zu berechnen, der einem interpolierten Wert ausgehend von den Helligkeitswerten der benachbarten Punkte auf derselben Zeile und auf der vorhergehenden Zeile, die vorher dekodiert worden waren, gleicht,

einen Speicher (89), um die dekodierten Helligkeitswerte zu speichern, die von den Dekodiermitteln (83) in dem Rhythmus geliefert werden, in dem die kodierten Werte empfangen werden, und um sie in einem konstanten Rhythmus an einem Ausgang der Dekodiervorrichtung auszugeben.

**Claims**

1. A method for the adaptive coding and decoding of a television picture in order to reduce the data flow rate, each point of this picture being represented by the value of its brightness, the coding consisting in:

grouping picture points in blocks of $N_p$ succes-sive points on a common line, $N_p$ being a fixed integer,

discriminating between a first and a second block type according to the brightness values of the points of the blocks,

coding the first block type by calculating a coded value equal to the difference between the brightness value of each point and a value obtained by coding and then by decoding the brightness value of the immediately preceding point and by quantifying this difference according to a non-linear quantification scale,

coding the second block type by calculating a coded value for at least one point of the block equal to the difference between the brightness value of this point and the value obtained by coding and then by decoding the brightness value of a point, called reference point, selected among the points having been coded previously, and then by quantifying the value of this difference according to such a non-linear quantification scale that the quantification error is lower for low values than for high values of the brightness difference,

distinguishing by a logic indicator between the coded values corresponding to the blocks of high gradient on the one hand and those corresponding to the blocks of low gradient on the other hand,

and the decoding, in view of obtaining a decoded brightness value for each picture point, consisting in:

identifying the coded values corresponding to the blocks of the first type on the one hand and those corresponding to the blocks of the second type and the other hand in accordance with the value of the logic indicator,

decoding each block of the first type by determining a decoded brightness value of each of these points by a quantification of its coded value according to a scale which is inverse to the quantification scale used for the coding operation, and by adding this value and the decoded brightness value of the immediately preceding point,

decoding each block of the second type by determining a decoded brightness value of each point having been coded and belonging to this block, by quantifying its coded value according to a scale which is inverse to the quantification scale used for the coding operation, and by adding this value to the decoded brightness value of the corresponding reference point,

characterized in that in view of the discrimination between two types of blocks, it consists in detecting the points, called points of high brightness gradient, whose brightness value differs by at least a value $\lambda$ from that of the adjacent points on the same line or on the preceding line, the first type of blocks being constituted by blocks called high brightness gradient blocks, containing at least one high gradient point, and the second type being constituted by blocks called low gradient blocks which do not contain any point having a high gradient,

and that the decoding further consists in determining a decoded brightness value of each point not having been coded and belonging to a block of the second type, by interpolating between the decoded brightness values of the adjacent points on the same line and on the preceding line.

2. A method according to claim 1, characterized in that the quantification scale is the same for all the points of the blocks having a high brightness gradient and it is chosen such that the quantification errors are smaller for high values for low values of the difference.

3. A method according to claim 1, characterized in that the quantification scale used for coding the points of the blocks of a high brightness gradient is different for the points of high gradient on the one hand and for the other points on the other hand, the quantification scale for the points of high gradient being chosen such that the quantification errors are lower for high values than for low values of the difference, and the quantification scale for the other points being chosen such that the quantification errors are lower for low values than for high values of the difference, and that it further consists in adding to the coded brightness value of each point of a block of high gradient a logic indicator indicating if this point is of a high gradient or not.

4. A method according to claim 1, characterized in that the blocks of $N_p$ points of two successive lines are shifted by a number of points at least equal to one and smaller than $N_p$.

5. A coding device for implementing the method according to claim 1, characterized in that it comprises:

a device (13) for detecting the points of high brightness gradient, this device receiving the digital brightness value of each point of a picture and a positive digital value $\lambda$ and supplying a logic signal, if the brightness value of a point differs from that of an adjacent point by an absolute value exceeding $\lambda$,

a device (19) for detecting the blocks of high brightness gradient, coupled to the device (13) for detecting points of high brightness gradient and supplying, for each block of $N_p$ successive points, a logic signal TB indicating if this block contains at least one point of a high gradient,

control means (22) receiving the signal TB, a line synchronisation HL and a clock signal HP for each point, and supplying for each point of the blocks of low gradient a logic signal TP indicating if this piont must be coded,

means (25) for coding the points, these means being controlled by the signal TB and comprising:

a device (15) for coding the points of the blocks of high gradient receiving successively the brightness value of each point of the blocks of high gradient and a decoded brightness value of the preceding point for supplying a coded value by a differential coding and a quantification according to a non-linear scale,

a device (20) for coding the points of the blocks of low gradient, controlled by the signal TP and receiving successively the brightness value of each point of the blocks of low gradient and a decoded brightness value of the corresponding reference point, for supplying a coded value by a differential coding and a quantification according to a non-linear scale in case a point is coded,

means (26) for decoding the points, these means being controlled by the signal TB in order to supply to the points coding means (25) a decoded brightness value of the point which preceeds the point which is being coded, these means comprising:

a decoding device (23) for decoding the points of the blocks of high gradient, for quantifying the coded brightness value of each point of the blocks of high gradient according to a non-linear scale which is inverse to the quantification scale used for coding, and for adding to this result the decoded brightness value of the point which has been decoded previously,

a device (24) for decoding the points of the blocks of low gradient, controlled by the signals TB and TP, for quantifying the coded brightness value of each point which is coded and which belongs to a block of low gradient, according to a non-linear scale which is inverse to the quantification scale used for the coding, and for adding to this result the decoded brightness value of the point which has been decoded previously, and for calculating for each non-coded point of the blocks of low gradient a decoded brightness value equal to an interpolated value on the basis of the brightness values of the adjacent points on the same line and on the preceding line which have been decoded previously,

a device (16) for shaping the coded information supplied by the coding means (25) for adding the value of the logic signal TB to the coded brightness values of the points of each block in order to indicate if this block is one of high gradient.

6. A decoding device for implementing the method according to claim 1, characterized in that it comprises:

means (76, 96, 97, 98, 99, 100) for receiving coded data, for extracting a logic signal TBL distinguishing those data corresponding to blocks of high gradient and those corresponding to blocks of low gradient and for deriving therefrom a logic signal TP defining the points which belong to blocks of low gradient and have not been coded,

means (77, 78, 79) for storing the coded brightness value of a point during its decoding operation,

means (23) for decoding the points of the high gradient blocks, controlled by the signal TBL in order to quantify the coded brightness value of each point of the blocks of high gradient according to a non-linear scale which is inverse to the quantification scale used for the coding, and to add to this result the decoded brightness value of the previously decoded point,

a device (24) for decoding the points of a low gradient block, controlled by the signals TBL and TP, in order to quantify the coded brightness value of each point which has been coded and which belongs to a low gradient block, according to a non-linear scale which is inverse to the quantification scale used for the coding operation, and to add to this result the decoded brightness value of the previously decoded point, and to calculate for each non-coded point of the low gradient blocks a decoded brightness value which is equal to an interpolated value on the basis of the brightness values of the adjacent points on the same line and on the preceding line and which have been decoded previously,

a memory (89) for storing the decoded brightness values supplied by the decoding means (83) at the rate at which these coded values are received and to restore them at a constant rate to an output of the decoding device.

Fig.1

1

Fig. 2

**0 123 573**

Fig.3

Fig.4

Fig.5

DISPOSITIF DE COMMANDE

TB HB HP TP

MISE AU FORMAT HDLC

VAL. SYN. HL

70 71 72

17

TB

MÉMOIRE MORTE 51

MÉMOIRE MORTE 53

MÉMOIRE MORTE 59

MÉMOIRE MORTE 65

REGISTRE 1 LIGNE + 1 POINT 66

REGISTRE 55

HP

TB 56

25 26 24 23 27 20 54 15 50 52 58 64 63 62 61 24

$X^j_n$ 14

$X'^j_{n-1}$

$X'^d_{n-1}$

$X'^d_n$

HP TB TP

4

Fig.6

Fig.7